# EUROPÄISCHE PATENTSCHRIFT

(11) **EP 3 410 024 B1**
(45) Veröffentlichungstag und Bekanntmachung des Hinweises auf die Patenterteilung: **02.06.2021**
(21) Anmeldenummer: 18167021.7
(22) Anmeldetag: 12.04.2018
(51) Int. Cl.: F24F 1/0007, F24F 6/14

(54) **KLIMATISIERUNGSVORRICHTUNG MIT BEFEUCHTUNG UND DEREN VERWENDUNG**
AIR CONDITIONING DEVICE WITH HUMIDIFICATION AND ITS USE
DISPOSITIF DE CONDITIONNEMENT D'AIR À FONCTION D'HUMIDIFICATION ET SON UTILISATION

(30) Priorität: 02.06.2017 DE 102017112269
(43) Veröffentlichungstag der Anmeldung: 05.12.2018
(73) Patentinhaber: Stadler, Rüdiger, 86929 Penzing (DE)
(72) Erfinder: Stadler, Rüdiger, 86929 Penzing (DE)
(74) Vertreter: Mollekopf, Gerd Willi

(56) Entgegenhaltungen:
- EP-A2- 0 157 999
- WO-A1-2017/020103
- US-A- 2 159 276

## Beschreibung

Die Erfindung betrifft eine Klimatisierungsvorrichtung zur Installation innerhalb eines zu klimatisierenden Raums, insbesondere eines Lager-, Reife- und/oder Aufzuchtraums. Vorteilhaft weist die Vorrichtung an zumindest einer Luftaustrittsöffnung eine vorzugsweise schwenkbare Luftdüse und/oder eine Luftbefeuchtungseinrichtung auf. Weiterhin betrifft die Erfindung eine Anordnung mit einer Klimatisierungsvorrichtung, die in einem zu klimatisierenden Raum installiert bzw. angeordnet ist.

Aus der DE 20 2004 003 443 U1 ist eine kanallose Lüftungsanlage zur Installation innerhalb eines zu klimatisierend Raums bekannt. Die Lüftungsanlage hat ein Gehäuse, das durch ein Leitblech in eine Ansaugkammer und eine Auslasskammer unterteilt ist. An der Öffnung zwischen der Ansaugkammer und der Auslasskammer ist ein Flügelrad eines Lüfters installiert. Der Motor zum Antreiben des Flügelrads ist oberhalb des Gehäuses aber innerhalb des zu klimatisierenden Raums installiert. An der Seitenwand des Gehäuses bzw. der Auslasskammer sind Induktionsdüsen befestigt, durch die die Luft aus der Auslasskammer in den zu klimatisierenden Raum ausgeblasen wird und dort eine Induktionsströmung induziert. Zur Klimatisierung der durch die Lüftungsanlage umgewälzten Luft ist in der Ansaugkammer ein Kühlregister angeordnet, mit dem die Luft abgekühlt wird. Zum Auffangen von Kondensat ist unterhalb des Gehäuses eine Kondensat-Auffangwanne angeordnet.

Klimatisierungsvorrichtungen zu Wohnzwecken sind bekannt aus: - EP 1 455 141 B1, - WO 2009/107452 A1, - WO 2017/049540 A1, - JP 02219934, - JP 03079938 A.

Aus der EP 0 157 999 A2 ist ein Raumklimatisierungsgerät bekannt, in dessen Gehäuse die Luft von einem Gebläse angesaugt und über einen Wärmetauscher zum Beheizen der Luft geführt wird, bevor die Luft durch einen Lamellen-Auslass ausgelassen wird. Die am Lamellen-Auslass angeordneten Lamellen sind in zwei verschiedene Auslassrichtungen orientiert und die Auffächerungsbreite des Luftauslasses lässt sich durch die Einstellung des Anstellwinkels der Lamellen mittels eines Motors ändern. Ohne Angabe einer Position wird auch vorgeschlagen, eine Befeuchtung vorzusehen. Weiterhin wird auch die Möglichkeit der Kühlung erwähnt.

Das Air-Conditioning-System der US 2,159,276 B schlägt eine Hausklimatisierung vor, bei der im Büroraum eine Einheit mit einem internen Heizkörper installiert ist. Dem Heizkörper wird von einer Zentralheizung Dampf zugeführt. Die Raumluftzirkulation wird angeregt, indem innerhalb des Gehäuses der Einheit Luft aus einem Injektor eingeblasen wird, welche die Raumluft von außerhalb des Gehäuses ansaugt und nach oben aus dem Gehäuse hinausdrückt. Dem Injektor wird die Luft von einer zentralen Luftversorgung zugeführt. Unterhalb des Heizkörpers sind Düsen installiert, die die zirkulierende Luft bei Bedarf befeuchten.

Es ist Aufgabe der Erfindung, eine Klimatisierungsvorrichtung mit verbesserter Klimatisierungseigenschaft vorzusehen, sowie eine Anordnung einer solchen Klimatisierungsvorrichtung in einem zu klimatisierenden Raum.

Die Klimatisierungsvorrichtung gemäß der Erfindung ist durch die Merkmale des Anspruchs 1 angegeben. Die Anordnung mit einem zu klimatisierenden Raum und einer Klimatisierungsvorrichtung ist durch die Merkmale des Anspruchs 12 angegeben. Die Verwendung der Klimatisierungsvorrichtung ist in Anspruch 13 definiert. Bevorzugte Ausführungsformen der Erfindung sind in den abhängigen Ansprüchen definiert.

Die Erfindung betrifft eine Klimatisierungsvorrichtung für die Inneninstallation in einem zu klimatisierenden Raum, beispielsweise einen Lager-, Reife- oder Aufzuchtraum. Der Raum ist vorzugsweise ein Reiferaum für Lebensmittel (z.B. Käse oder für Backwaren-Teig) sein oder ein Raum für die Gemüse- oder Pilzaufzucht oder ein Raum für die Lagerung von Lebensmitteln (z.B. Gemüse oder Obst). Der zu klimatisierende Raum ist vorzugsweise ein Lager-, Reife- und/oder Aufzuchtraum, bei dem sich die Anforderung an Temperatur und/oder Luftfeuchte erheblich von denen unterscheidet, die an einen klimatisierten Raum gestellt werden, in dem sich Menschen aufhalten (z.B. zu Wohn- oder Arbeitszwecken oder zum Einkaufen). Alternativ oder zusätzlich ist die Klimatisierungsvorrichtung nicht vorgesehen und ausgelegt zur Klimatisierung von Wohn-und/oder Arbeitsräumen.

Bei der Klimatisierungsvorrichtung für die Inneninstallation in einem Lager-, Reife- oder Aufzuchtraum sind eine oder mehrere seitliche Eintrittsöffnungen an einer bzw. bei den Luftdüsen vorgesehen. Die Klimatisierungsvorrichtung weist in dieser Ausführungsform auf: ein Gehäuse mit einer Ansaugkammer und einer Auslasskammer; eine im Gehäuse angeordnete Luftfördereinrichtung, wobei die Luftfördereinrichtung dazu ausgelegt ist, Luft von der Ansaugkammer zur Auslasskammer zu fördern; eine im Gehäuse oder unterhalb der Ansaugkammer angeordnete Wärmetauschereinrichtung; und zumindest eine an der Auslasskammer angeordnete Luftaustrittsöffnung. Bei dieser Ausführungsform weist die zumindest eine Luftaustrittsöffnung eine Luftdüse auf, insbesondere zumindest eine schwenkbar gelagerte Luftdüse. Zwischen der zumindest einen Luftdüse und der zugeordneten Öffnung in der Wand des Gehäuses ist eine Ansaugöffnung angeordnet, vorzugsweise ist ein Ansaugspalt angeordnet. Alternativ oder zusätzlich sind an der Luftdüse eine oder mehrere seitliche Eintrittsöffnungen oder Eintrittsspalte angeordnet, durch den bzw. die Luft E von außerhalb der Luftdüse und von außerhalb des Gehäuses in die Luftdüse einströmt.

Durch den Spalt gelangt aus dem Außenraum der Klimatisierungsvorrichtung Luft ('Sekundärluft') in die Düse und wird von der mittels der Luftfördereinrichtung geförderten Luft ('Primärluft') mitgerissen. Das Mitreißen bzw. Ansaugen der Sekundärluft erfolgt nach dem Venturi-Prinzip bzw. wie bei einem Mantelstromtriebwerk.

Die Klimatisierungsvorrichtung weist vorteilhaft auf: eine Luftbefeuchtungseinrichtung.

In Ausgestaltung ist die Wärmetauschereinrichtung vollständig oder teilweise in der Ansaugkammer angeordnet. Vorzugsweise sind die Ansaugkammer und die Auslasskammer durch eine Trennwand voneinander getrennt. Die Trennwand kann als Strömungsleiteinrichtung ausgebildet sein. Die Ansaugkammer kann auch als Unterdruckkammer bzw. die Auslasskammer kann auch als Überdruckkammer bezeichnet werden, weil sich beim Betrieb der Luftfördereinrichtung ein leichter Unterdruck in der Ansaugkammer bzw. ein leichter Überdruck in der Auslasskammer ausbildet.

Die Luftbefeuchtungseinrichtung befeuchtet die Luft im Innenraum der Ansaugkammer bzw. die durch den Innenraum der Ansaugkammer geförderte Luft. Durch die Befeuchtung wird die Klimatisierung verbessert, weil dann ggf. eine zu geringe Luftfeuchtigkeit auf einen vorgegebenen Wert erhöht werden kann. Durch das Befeuchten wird beispielsweise die Feuchte in dem im Raum gelagerten Gut stabilisiert oder erhöht. Ein Austrockenen des gelagerten Guts wird verhindert. Ggf. wird durch das Befeuchten auch die Feuchtigkeitsmenge, die bei einer Abkühlung an der Kühlung durch Kondensation verloren gegangen ist, wieder in die umgewälzte Luft zurückgeführt. Vorzugsweise erfolgt das Zuführen von Feuchtigkeit in den Innenraum der Ansaugkammer und/oder der Auslasskammer, so dass die aus der Auslasskammer ausgeblasene Luft bereits gleichmäßig mit Feuchtigkeit beaufschlagt ist. Die Luftbefeuchtungseinrichtung ist dazu ausgebildet, Wasserdampf und/oder Wassernebel (z.B. Aerosol) zu erzeugen. Vorzugsweise erfolgt die Erzeugung der Feuchtigkeit zum Befeuchten der Luft mittels einem oder mehreren der folgenden Einrichtungen: ein Ultraschallzerstäuber, ein thermisch betriebener Wasserverdampfer, eine Wasser-Sprüh- bzw. Vernebelungseinrichtung (z.B. eine Sprühdüse).

Gemäß einer Ausgestaltung ist die Luftbefeuchtungseinrichtung außerhalb des Gehäuses der Klimatisierungsvorrichtung angeordnet. Vorteilhaft ist die Luftbefeuchtungseinrichtung mit dem Innenraum des Gehäuses über einen Zuleitungskanal oder eine Fluidverbindung verbunden ist. Alternativ oder zusätzlich ist die Luftbefeuchtungseinrichtung innerhalb eines Befeuchtergehäuses angeordnet und der Innenraum des Befeuchtergehäuses ist mit dem Innenraum des Gehäuses der Klimatisierungsvorrichtung über eine Fluidverbindung verbunden. Die Luftbefeuchtungseinrichtung kann innerhalb des Gehäuses (in der Auslasskammer, vorzugsweise in der Ansaugkammer) angeordnet sein. Vorzugsweise ist die Luftbefeuchtungseinrichtung außerhalb des Gehäuses angeordnet.

Vorteilhaft ist an oder in der Fluidverbindung und/oder an oder in dem Zuleitungskanal eine Flüssigkeitsseparations- oder Sperreinrichtung angeordnet, die dazu eingerichtet ist, das Eindringen von Flüssigkeit aus dem Innenraum des Gehäuses der Klimatisierungsvorrichtung in den Innenraum des Befeuchtergehäuses zu blockieren. Vorzugsweise wirkt die Flüssigkeitsseparations- oder Sperreinrichtung als Flüssigkeitsfalle zwischen dem Innenraum des Vorrichtungsgehäuse und der Befeuchtungseinrichtung, um ein Eindringen von Flüssigkeit in die Befeuchtungseinrichtung zu verhindern.

In Ausgestaltung weist das Befeuchtergehäuse eine Zuluftleitung oder -öffnung auf, deren Eintrittsseite nicht mit dem Innenraum des Gehäuses der Klimatisierungsvorrichtung verbunden ist. Alternativ oder zusätzliche weist die Befeuchtungseinrichtung eine Wasserzufuhrleitung zum Zuführen von Wasser auf, wobei vorteilhaft die Wasserzufuhrleitung nach außerhalb des zu klimatisierenden Raums geführt ist. Vorzugsweise ist die Eintrittsseite der Zuluftleitung oder -öffnung mit dem Innenraum des zu klimatisierenden Raums verbunden und ganz bevorzugt mit einer außerhalb des zu klimatisierenden Raums gelegenen Umgebungsluft. Z.B. ist die Zuluftleitung der Luftbefeuchtungseinrichtung zur Außenseite und/oder durch die Wand des zu klimatisierenden Raums geführt. Ganz besonders vorteilhaft gibt die Luftbefeuchtungseinrichtung das Wasser ab in eine Luftströmung, die durch das Gehäuse der Luftbefeuchtungseinrichtung geführt wird. Dadurch kann sich das z.B. als Tröpfchen, Nebel und/oder Dampf von der Luftbefeuchtungseinrichtung abgegebene Wasser bereits außerhalb des Gehäuses der Klimatisierungsvorrichtung und des zu klimatisierenden Raums in der Luft, die durch das Befeuchtergehäuse geführt ist, verteilen. Evtl. Kondensation oder Ausfällung von Feuchtigkeit erfolgt dann schon in dem Befeuchtergehäuse und/oder in der oder einer Fluidleitung (Kanal) zwischen Luftbefeuchtungseinrichtung und Gehäuse der Klimatisierungsvorrichtung. Damit wird Feuchteniederschlag oder Tropfenbildung im Gehäuse der Klimatisierungsvorrichtung verringert oder verhindert.

Vorzugsweise ist das der Befeuchtungseinrichtung zugeführte Wasser entkalktes Wasser (z.B. Osmosewasser, Wasser mit einem Leitwert unter 5 µS (Mikrosiemens)).

Vorteilhaft weist die zumindest eine Luftaustrittsöffnung eine Luftdüse auf, insbesondere zumindest eine schwenkbar gelagerte Luftdüse. Vorzugsweise sind ein, zwei, drei, vier oder mehr Luftaustrittsöffnungen bzw. Luftdüsen vorgesehen. Vorteilhaft sind mindestens zwei, drei, vier, fünf oder mehr Luftaustrittsöffnungen vorgesehen, die jeweils zumindest eine Luftdüse aufweisen und/oder die räumlich voneinander beabstandet sind. Räumlich voneinander beabstandet heißt vorzugsweise, dass die Luftaustrittsöffnungen (und somit vorzugsweise die Luftdüsen) räumlich getrennt sind und/oder zwischen den Luftaustrittsöffnungen Abschnitte (z.B. Wandabschnitte oder wandähnliche Abschnitte) des Gehäuses der Klimatisierungsvorrichtung angeordnet sind. Es können alle Luftaustrittsöffnungen Luftdüsen aufweisen oder nur ein Teil der Luftaustrittsöffnungen. Vorzugsweise hat das Gehäuse an der Stelle der Luftaustrittsöffnung eine Wandöffnung. Weiter vorzugsweise ist in die Wandöffnung die Luftdüse eingesetzt und/oder die Luftdüse ist vor der Wandöffnung angeordnet. Beispielsweise sind ein oder mehrere Luftdüsen eingesetzt, während ein oder mehrere andere Luftdüsen vor der Wandöffnung angeordnet sind.

In Ausgestaltung wird beim Betrieb der Luftfördereinrichtung die Luft mit einer solchen Durchflussrate durch die oder jede der Luftdüsen gefördert, so dass sich auf der Ausströmungsseite der Luftdüsen durch den hohen Luftstrom in dem zu klimatisierenden Raum ein Induktionsluftstrom ausbildet, bei dem in der Randzone um die schnellströmende Luft aus der Düse eine Mischzone ausgebildet wird. In der Mischzone mischt sich die Luft aus der Düse mit der Umgebungsluft innerhalb eines großen Volumens bzw. in einer großflächigen Mischungszone, so dass darüber die Raumluft ausgetauscht und klimatisiert wird. Die Reichweite der Jetströmung aus der/den Luftdüsen ist sehr groß, so dass trotz beschränkter Grundfläche/Grundvolumen der Klimatisierungsvorrichtung ein großes Innenvolumen des zu klimatisierenden Raums gleichmäßig klimatisiert werden kann.

In Ausgestaltung ist der zumindest einen Luftaustrittsöffnung eine Tropfenabscheideeinrichtung zugeordnet, die den Austritt von Flüssigkeitstropfen aus der Auslasskammer zur Außenseite der Auslasskammer verhindert oder reduziert. Insbesondere ist die Tropfenabscheideeinrichtung zumindest teilweise in der zumindest einen Luftdüse angeordnet. Die Tropfenabscheideeinrichtung verhindert den Austritt von flüssigem Reinigungsmedium aus der Auslasskammer während der Nassreinigung der Auslasskammer und/oder der Ansaugkammer. Weiterhin verhindert die Tropfenabscheideeinrichtung den Austritt von Kondensat, falls beim Betrieb der Klimatisierungsvorrichtung Tropfen oder Flüssigkeit in Richtung Auslassöffnung transportiert werden. Die Tropfenabscheideeinrichtung kann aus sternförmigen, kreuzförmigen oder gewendelten Platten ausgebildet sein.

Vorzugsweise ist die Tropfenabscheideeinrichtung als Träger- und/oder Verbindungselement ausgebildet, das die Luftdüse mit dem Gehäuse der Klimatisierungsvorrichtung verbindet. In Ausgestaltung kann die Luftdüse so an der Tropfenabscheideeinrichtung angeordnet sein, dass zwischen dem eintrittsseitigen Ende der Luftdüse und der Außenseite des Gehäuses ein Lufteintrittsspalt bzw. eine Lufteintrittsöffnung (s.o.) ausgebildet ist. Vorzugsweise ist die Luftdüse schwenkbar an der Tropfenabscheideeinrichtung gelagert.

Bei einer Ausgestaltung weist die Wärmetauschereinrichtung eine Heizeinrichtung und/oder eine Kühleinrichtung auf. Eine Kühleinrichtung dient zur Kühlung der Luft, kann aber auch zur Reduzierung der Luftfeuchtigkeit eingesetzt werden. Beispielsweise kann bei an sich passender Lufttemperatur durch Betreiben der Kühleinrichtung der Raumluft Feuchtigkeit entzogen werden. Der Abkühlung der Raumluft wird dann vorteilhaft durch Betreiben der Heizeinrichtung entgegengewirkt. Vorzugsweise ist die Kühleinrichtung ein Verdampfer eines Wärmepumpensystems und/oder die Kühleinrichtung ist ein Kondensator eines oder des Wärmepumpensystems.

Vorteilhaft ist an oder innerhalb der Ansaugkammer und/oder der Auslasskammer zumindest eine Verteilungseinrichtung zum Verteilen eines Reinigungsmediums innerhalb der Ansaugkammer und/oder der Auslasskammer angeordnet. Insbesondere weist die Verteilungseinrichtung eine Sprühdüse auf. Vorteilhaft sind in der Ansaugkammer und/oder in der Auslasskammer ein, zwei, drei oder mehr Verteilungseinrichtungen für das Reinigungsmedium vorgesehen. Eine oder die Verteilungseinrichtungen können Sprühdüsen, strahlbetätigte Drehdüsen, Dreharme oder Schaumlanzen sein. Durch den Betrieb der Klimatisierungsvorrichtung kann sich an den Innenwänden der Klimatisierungsvorrichtung (insbesondere an der großflächigen Wärmetauschereinrichtung und an den Gebläseoberflächen der Luftfördereinrichtung) eine Verunreinigungsschicht (z.B. Plaque, Bakterienschicht) ausbilden, die z.B. zwischen einem Chargenwechsel des in dem zu klimatisierenden Raum eingelagerten Guts entfernt werden muss. Zum Reinigen wird ein Reinigungsmedium auf die Oberflächen aufgebracht und nach Einwirkung entfernt. Damit ist eine Reinigung vor Ort möglich, die als Cleaning in Place (CIP) bezeichnet wird, wobei die zu reinigenden Elemente nicht aus der Betriebsposition entfernt werden (müssen).

Vorzugsweise weist das Gehäuse ein oder mehrere Türen oder Klappen auf. Durch das Öffnen der Türen oder Klappen wird ein Reinigungs- und/oder Wartungszugang zum Innenraum der Auslasskammer und/oder der Ansaugkammer bereitgestellt.

Bei einer anderen Ausführungsform einer Klimatisierungsvorrichtung für die Inneninstallation in einem Lager-, Reife- oder Aufzuchtraum ist eine Tropfenabscheideeinrichtung vorgesehen. Die Klimatisierungsvorrichtung weist in dieser Ausführungsform auf: ein Gehäuse mit einer Ansaugkammer und einer Auslasskammer; eine im Gehäuse angeordnete Luftfördereinrichtung, wobei die Luftfördereinrichtung dazu ausgelegt ist, Luft von der Ansaugkammer zur Auslasskammer zu fördern; eine im Gehäuse oder unterhalb der Ansaugkammerangeordnete Wärmetauschereinrichtung; und zumindest eine an der Auslasskammer angeordnete Luftaustrittsöffnung. Der zumindest einen Luftaustrittsöffnung ist eine Tropfenabscheideeinrichtung zugeordnet, die den Austritt von Flüssigkeitstropfen aus der Auslasskammer zur Außenseite der Auslasskammer verhindert oder reduziert. Vorteilhaft weist die zumindest eine Luftaustrittsöffnung eine Luftdüse auf und die Tropfenabscheideeinrichtung ist vorteilhaft zumindest teilweise in der zumindest einen Luftdüse angeordnet.

Eine erfindungsgemäße Anordnung weist einen zu klimatisierenden Raum und eine darin installierte Klimatisierungsvorrichtung auf. Die Klimatisierungsvorrichtung weist eine oder mehrere oder eine beliebige Kombination von Merkmalen wie oben und/oder unten beschrieben auf, insbesondere ist die Klimatisierungsvorrichtung gemäß obiger Ausgestaltungen ausgebildet. Das Gehäuse der Klimatisierungsvorrichtung mit der Ansaugkammer und der Auslasskammer ist innerhalb des zu klimatisierenden Raums angeordnet. Weiterhin sind die Luftbefeuchtungseinrichtung und/oder ein Antrieb der Luftfördereinrichtung außerhalb des Raums angeordnet.

Bei außerhalb des zu klimatisierenden Raums gelegenem Antrieb (z.B. Elektromotor) entsteht die Wärme außerhalb des Raums, so dass diese Abwärme nicht durch die Wärmetauschereinrichtung abgeführt werden muss. Beispielsweise ist der Antrieb oberhalb der Decke des zu klimatisierenden Raums angeordnet und/oder der Antrieb ist mittels einer Welle mit der Luftfördereinrichtung bzw. deren Lüfterrad verbunden. Vorzugsweise weist die Luftfördereinrichtung ein Radialgebläse auf.

Bei einer anderen Ausführungsform der Anordnung mit einem zu klimatisierenden Raum und einer Klimatisierungsvorrichtung ist der Antrieb einer Luftfördereinrichtung außerhalb des zu klimatisierenden Raums angeordnet. Die Klimatisierungsvorrichtung weist eine oder mehrere oder eine beliebige Kombination von Merkmalen wie oben und/oder unten beschrieben auf, insbesondere ist die Klimatisierungsvorrichtung gemäß obiger Ausgestaltungen ausgebildet. Die Klimatisierungsvorrichtung weist bei dieser Ausführungsform der Anordnung auf: ein Gehäuse mit einer Ansaugkammer und einer Auslasskammer, wobei das Gehäuse mit der Ansaugkammer und der Auslasskammer innerhalb des zu klimatisierenden Raums angeordnet ist; eine im Gehäuse angeordnete Luftfördereinrichtung, wobei die Luftfördereinrichtung dazu ausgelegt ist, Luft von der Ansaugkammer zur Auslasskammer zu fördern; eine im Gehäuse oder unterhalb der Ansaugkammer angeordnete Wärmetauschereinrichtung; und zumindest eine an der Auslasskammer angeordnete Luftaustrittsöffnung, wobei ein Antrieb der Luftfördereinrichtung außerhalb des Raums angeordnet ist.

Zusammenfassend betrifft die Erfindung eine Klimatisierungsvorrichtung für die Inneninstallation in einem Lager- oder Aufzuchtraum sowie eine Anordnung einer Klimatisierungsvorrichtung innerhalb eines zu klimatisierenden Raums. Die Klimatisierungsvorrichtung weist auf: ein Gehäuse mit einer Ansaugkammer und einer Auslasskammer; eine im Gehäuse angeordnete Luftfördereinrichtung, wobei die Luftfördereinrichtung dazu ausgelegt ist, Luft von der Ansaugkammer zur Auslasskammer zu fördern; eine im Gehäuse oder unterhalb der Ansaugkammer angeordnete Wärmetauschereinrichtung; zumindest eine an der Auslasskammer angeordnete Luftaustrittsöffnung; und zumindest eine Luftdüse mit Ansaugöffnung und/oder seitlicher Eintrittsöffnung. In den anderen Ausgestaltungen weist die Klimatisierungsvorrichtung anstelle oder zusätzlich zur Luftbefeuchtungseinrichtung einen Tropfenabscheider und/oder einen Abscheider zur Luftbefeuchtungseinrichtung und/oder einen Antrieb außerhalb des zu klimatisierenden Raums auf.

Anhand von Figuren werden Ausführungsbeispiele der Erfindung näher erläutert. Es zeigen:
- Fig. 1: ein Klimagerät in Schnittansicht mit innenliegendem Lüftermotor,
- Fig. 2: eine Schnittansicht einer weiteren Ausführung eines Klimageräts mit außenliegendem Lüftermotor und beispielhaft die Montage in einem zu klimatisierend Raum,
- Fig. 3: eine perspektivische Ansicht des geöffneten Klimageräts von Fig. 2,
- Fig. 4: eine weitere perspektivische Ansicht des Klimageräts von Fig. 2,
- Fig. 5: eine perspektivische Ansicht des geöffneten Klimageräts von Fig. 1,
- Fig. 6a: eine perspektivische Vorderansicht einer an der Gehäusewand des Klimageräts installierten Induktionsdüse,
- Fig. 6b: eine perspektivische Rückansicht der Induktionsdüse von Fig. 6a,
- Fig. 6c: die Induktionsdüse von Fig. 6a in Schnittansicht,
- Fig. 7: eine weitere Ausführung eines Klimageräts in Schnittansicht mit installierten Reinigungsdüsen, und
- Fig. 8: eine Steuerung und Komponenten des Klimageräts in Blockdarstellung.

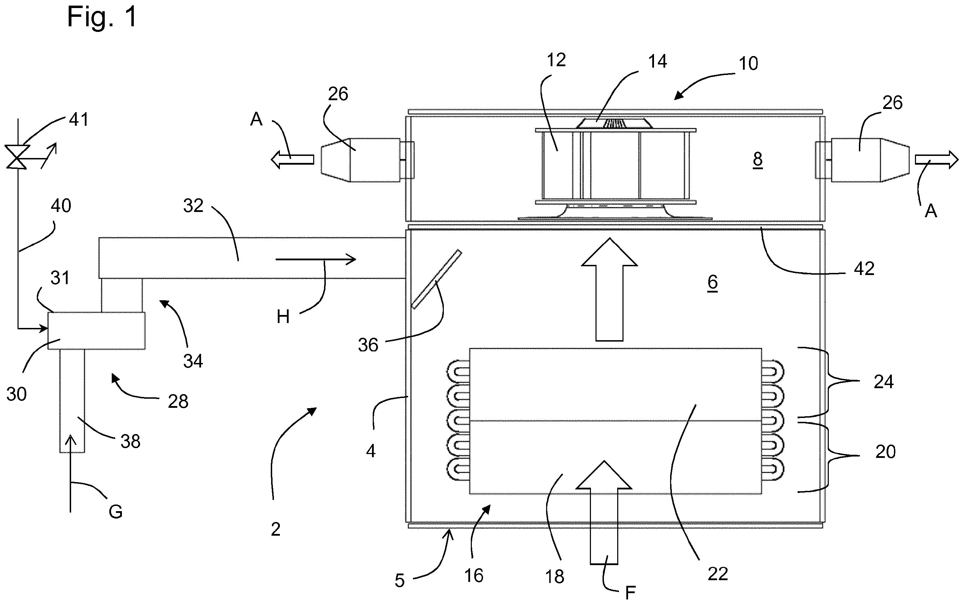

Fig. 1 zeigt eine erste Ausführungsform eines Klimageräts 2 in Schnittansicht. Ein Teil der Komponenten des Klimageräts 2 sind im Inneren eines Gehäuses 4 angeordnet. Vorzugsweise ist das Gehäuse aus Edelstahlplatten gefertigt oder aus einem sonstigen vorzugsweise korrosionsfreien und/oder leicht zu reinigenden Material. Vorzugsweise ist die Grundform des Gehäuses (von oben gesehen) viereckig (z.B. quadratisch), achteckig, oder mehreckig, die Grundform des Gehäuses kann aber auch rund sein.

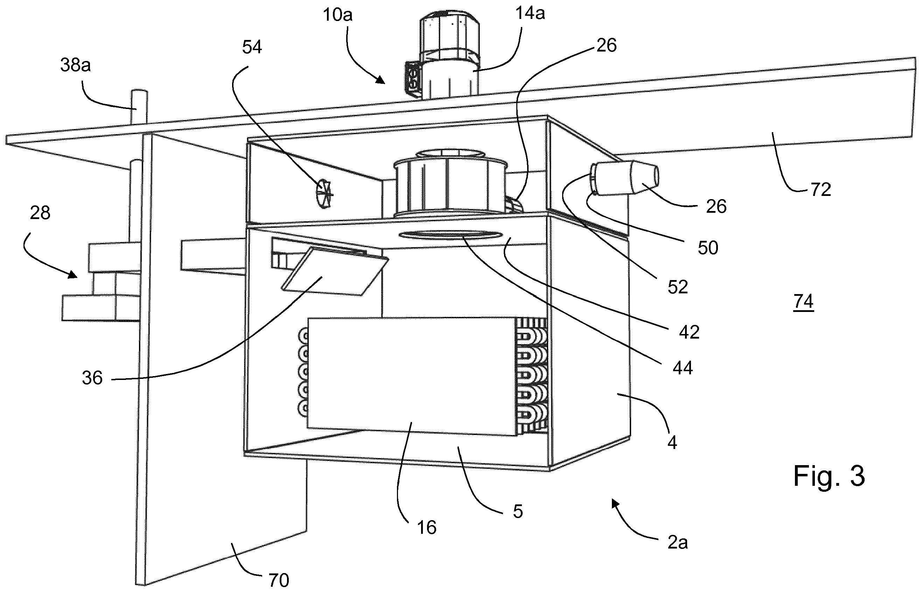

Im Inneren ist der Innenraum des Gehäuses 4 durch eine Trennwand 42 unterteilt in eine Ansaugkammer 6 und eine Auslasskammer 8. Vorzugsweise ist die Trennwand 42 aus dem gleichen Material wie das Gehäuse 4. Die Trennwand 42 hat eine Ansaugöffnung 44 (vgl. Fig. 3), durch die ein Lüfter 10 Luft aus der Ansaugkammer 6 ansaugt. Die vom Lüfter 10 geförderte Luft wird in die Auslasskammer 8 geblasen, so dass zwischen Ansaugkammer und Auslasskammer eine leichte Druckzunahme vorliegt. Daher kann die Ansaugkammer 6 auch als Unterdruckkammer und die Auslasskammer 8 auch als Druckkammer bezeichnet werden. Der Lüfter 10 wirkt als Radialgebläse und hat einen innenliegenden Antrieb bzw. Motor 14 und ein Flügelrad 12, das die durch die Öffnung 44 angesaugte Luft radial in Richtung Seitenwand der Auslasskammer ausbläst. Der Antrieb 14 ist vorzugsweise ein (vorzugsweise) drehzahleinstellbarer oder drehzahlregelbarer Elektromotor. Es kann anstelle eines Elektromotors auch jede andere Art von Motor eingesetzt werden.

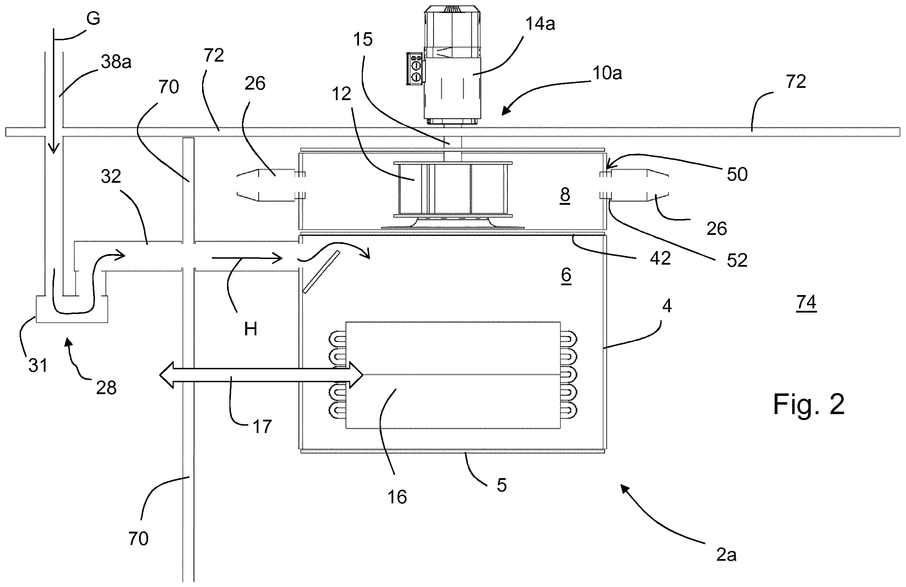

Die durch die Ansaugkammer 6 angesaugte Raumluft F wird aus dem zu klimatisierenden Raum 74 (vgl. Fig. 2) durch eine Bodenöffnung 5 am Boden der Ansaugkammer 6 angesaugt. Anmerkung: In den Figuren ist die Bodenöffnung 5 nicht explizit dargestellt, diese ist bei den erläuterten Ausführungsbeispielen jedoch am Boden des Gehäuses 4 so ausgeführt, dass die Raumluft F durch einen möglichst großen Eintrittsquerschnitt und/oder durch eine Vielzahl von Eintrittsquerschnitten in die Ansaugkammer 6 einströmen kann. Beispielsweise können an der Seitenwand der Ansaugkammer 6 (zusätzlich oder alternative zur Bodenöffnung 5) verteilte Eintrittsöffnungen vorgesehen sein.

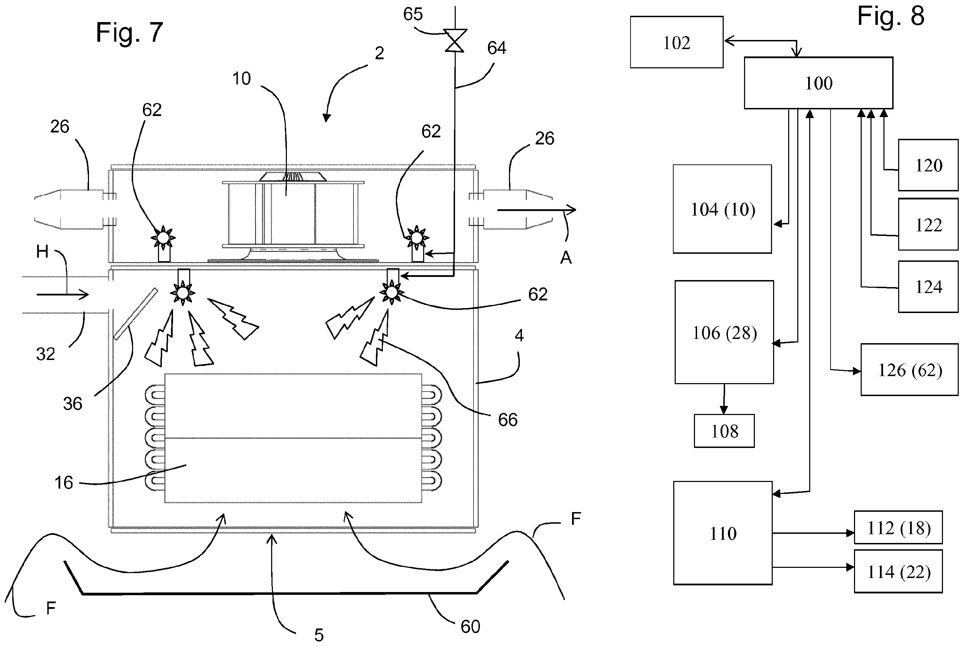

Die in die Ansaugkammer 6 einströmende Raumluft F ist so geführt, dass zumindest ein großer Teil der Strömung durch einen Wärmetauscher 16 strömt. In den dargestellten Ausführungsbeispielen weist der Wärmetauscher 16 eine (vorzugsweise von der Strömung zuerst durchströmte) Kühlung 18 zum Abkühlen der Raumluft F und/oder zum Kondensieren von Feuchtigkeit aus der Raumluft F und eine Heizung 22 zum Erwärmen der Raumluft auf. Der Kühler 18 kühlt die vorbeiströmende Luft ab, wobei vorzugsweise durch die Abkühlung Luftfeuchtigkeit auskondensiert und so der Raumluft F Feuchtigkeit entzogen wird. Das sich am Kühler 18 bildende Kondensat kann beispielsweis in die in Fig. 7 dargestellte Auffangwanne 60 abtropfen, so dass keine Wassertropfen auf das im zu klimatisierenden Raum gelagerte Gut gelangt. In der Version, bei der der Gehäuseboden geschlossen ist und die Raumluft F nur durch seitliche Einlässe einströmt, kann der Boden des Gehäuses 4 selbst als Auffangwanne wirken.

Vorzugsweise ist der Kühler 18 ein Verdampfer eines mittels Kühlmittel betriebenen Wärmepumpensystems. In Fig. 1 sind die Windungen der Kühlmittelleitungen des Kühlkörpers 20 der Kühlung 18 dargestellt. Vorzugsweise ist die Heizung 22 der Kondensator eines mittels Kühlmittel betriebenen Wärmepumpensystems. Vorzugsweise sind der Verdampfer und der Kondensator die Elemente eines gemeinsamen Wärmepumpensystems, können aber auch zwei unterschiedlichen Wärmepumpensystemen zugeordnet sein. Je nach zu klimatisierendem Raum, Außentemperatur, Klimatisierungsanforderungen des im Raum gelagerten Guts und/oder der (zeitlichen) Phase der Klimatisierung ist nur die Heizung 22 oder nur die Kühlung 18 vorgesehen. In der Regel wird aber sowohl Heizung als auch Kühlung erforderlich sein. Besteht nur ein geringer Heizbedarf, so kann die Heizung 22 als elektrische Heizung oder Radiator (z.B. einer Zentralheizung) vorgesehen sein, die beispielsweise mit einem Verdampfer als Kühlung 18 kombiniert ist.

Die Luft im Innenraum der Ansaugkammer 6 wird durch einen Luftbefeuchter 28 befeuchtet. Der Luftbefeuchter kann direkt in der Ansaugkammer 6 oder unmittelbar angrenzend an eine Wand der Ansaugkammer angrenzend angeordnet sein. Bevorzugt und wie in den Beispielen dargestellt, ist der Luftbefeuchter 28 über einen Fluidkanal 32 mit dem Innenraum der Ansaugkammer 6 verbunden, um Feuchtigkeit vom Luftbefeuchter 28 dem Innenraum der Ansaugkammer 6 zuzuführen. In einem Gehäuse 31 des Luftbefeuchters 28 ist ein Wasser-Zerstäuber 30 angeordnet, der über eine Wasserzuleitung 40 zugeführtes Wasser zerstäubt und in die vor dem Zerstäuber liegende bzw. strömende Luft abgibt. Der Transport der mit Wasser angereicherten Luft H (Aerosol bzw. Nebel) durch den Fluidkanal 32 wird dadurch erreicht, dass in das Gehäuse 31 des Luftbefeuchters 28 Außenluft G durch eine Zuluftleitung 38 zugeführt wird.

Vorzugsweise und wie in Fig. 2 noch weiter dargestellt, wird dem Luftbefeuchter 28 Außenluft G zugeführt, die von außerhalb des zu klimatisierenden Raums angesaugt und/oder eingeblasen wird. Der Vorteil der Verwendung von Außenluft G ist, dass diese Luft nicht mit Verunreinigungen oder (Ab-)Gasen, die im zu klimatisierenden Raum vorhanden sein können, belastet wird und dadurch der Bedarf zur Reinigung des Luftbefeuchters 28 entfällt oder verringert ist. Vorteilhaft ist in der Zuluftleitung 38 oder dieser zugeordnet ein Luftfilter angeordnet, um die Außenluft G zu filtern. Alternativ oder zusätzlich (Mischung von Außen- und Raumluft) kann dem Luftbefeuchter Raumluft F aus dem zu klimatisierenden Raum zugeführt werden. Gegebenenfalls entfällt dann die Zuluftleitung 38, während vorteilhaft die Luftzufuhr zum Luftbefeuchter 28 durch einen Luftfilter erfolgt.

Die Strömung der Luft G zum Luftbefeuchter 28 und von dort in die Ansaugkammer 6 kann passiv erfolgen durch das Druckgefälle, das vorhanden ist zwischen dem Außenluftdruck (und/oder dem Raumluftdruck, der in der Regel der Außenluftdruck ist,) und dem leichten Unterdruck in der Ansaugkammer 6 aufgrund der Förderung durch den Lüfter 10. Alternativ oder zusätzlich kann die Förderung der Luft durch das Gehäuse 31 des Luftbefeuchters 28 durch einen weiteren, nicht dargestellten Luftförderer (i.e. Lüfter) erfolgen.

Vorteilhaft weist der Luftbefeuchter 28 einen Wasser-Zerstäuber 30 auf, z.B. einen Ultraschallzerstäuber. Zur Erhöhung der Feuchtigkeit in der durch den Luftbefeuchter strömenden Luft kann alternativ auch ein Verdampfer eingesetzt sein, der der Luft das Wasser in Form von Wasserdampf zuführt. Vorzugsweise wird der durch den Luftbefeuchter strömenden Luft die Menge an Wasser bzw. Feuchtigkeit gesteuert oder geregelt zugeführt. Beispielsweise ist die Rate der Wassertröpfchenerzeugung (z.B. Zerstäuber) oder des Wasserdampfs (z.B. Verdampfer) gesteuert, in dem die Leistung des Luftbefeuchters gesteuert bzw. geregelt wird (z.B. die Schallleistung des Zerstäubers oder die Heizleistung des Verdampfers). Alternativ oder zusätzlich wird die Menge des vom Luftbefeuchter abgegebenen Wassers durch die Dosierung der Wasserzufuhr zum Luftbefeuchter gesteuert bzw. geregelt; beispielsweise mittels des in oder bei der Wasserzuleitung 40 angeordneten Dosierers 41. Das zum Luftbefeuchter 28 zugeführte Wasser ist vorzugsweise destilliertes bzw. entionisiertes Wasser, so dass Kalkrückstände im Luftbefeuchter bzw. im Strömungsweg der wassergesättigten Luft H vermieden werden. Darüber hinaus hat ein solches Wasser desinfizierende Wirkung, so dass die Bildung von Bakterien o.ä. reduziert oder verhindert ist.

Da das Hauptanwendungsgebiet des Klimageräts 2, 2a die Klimatisierung in Räumen zur Lebensmittellagerung ist, ist es bei manchen Anwendungen erforderlich, dass mit dem Wechsel einer Charge des gelagerten Guts (z.B. Käse) eine grundlegende Reinigung auch des Klimageräts durchgeführt werden muss. Dazu werden die Reinigungsmittel bei geöffnetem Gehäuse 4 des Klimageräts z.B. mit einer Reinigungslanze in die Ansaug- und Auslasskammer 6, 8 eingesprüht bzw. mit darin installierten Sprühdüsen (vgl. 62 in Fig. 7) verteilt. Zur Vermeidung von nachfolgenden Verunreinigungen beim Betrieb des Luftbefeuchters 28 aufgrund von Ablagerung von Reinigungsmitteln, darf der Luftbefeuchter nicht mit Reinigungsmittel beaufschlagt werden. Da an diesen bei Außenluft-Betrieb auch keine Verunreinigungen aus der Raumluft F gelangen, ist eine Grundreinigung des Luftbefeuchters im Umfange des Klimageräts auch nicht notwendig.

Daher sind bei den dargestellten Ausführungsbeispielen zwei Einrichtungen vorgesehen, die verhindern, dass beim Reinigen des Klimageräts 10, 10a Reinigungsmittel in die Zuleitung vom Luftbefeuchter 28 (z.B. Fluidkanal 32) oder in den Luftbefeuchter gelangen. Am Austritt des Fluidkanals 32 in den Innenraum der Ansaugkammer 6 ist eine Abschirmung 36 angeordnet, die verhindert, dass Strahlen, Tröpfchen oder Schaum des in der Ansaugkammer freigesetzten Reinigungsmittels in den Fluidkanal 32 gelangt.

Als weitere Barriere für das Reinigungsmittel ist der Zerstäuber 30 nicht in einer Sichtlinie (line-of-sight) des Kanals 32 ausgehend vom Austritt zur Kammer 6 angeordnet, sondern die Fluidverbindung zwischen dem Zerstäuber 30 bzw. dem Luftbefeuchter 28 weist eine Umlenkung bzw. Tropfenfalle 34 auf, so dass auch geringfügige in den Kanal 32 eindringende Reinigungsmitteltropfen nicht bis direkt auf den Zerstäuber 30 gelangen. Wie dargestellt, ist die Tropfenfalle 34 vorteilhaft durch eine L-förmige Umlenkung im Fluidkanal zwischen Luftbefeuchter 28 und Ansaugkammer 6 angeordnet. Alternativ kann die Tropfenfalle bzw. Umlenkung auch bogenförmig, gekrümmt, mehrfachgefaltet oder gewinkelt ausgestaltet sein. Sollte flüssiges bzw. fließendes Reinigungsmittel dennoch im Fluidkanal Richtung Luftbefeuchter abfließen, so ist vorteilhaft eine nicht dargestellte Flüssigkeitsbarriere und -ableitung im Gehäuse 31 des Luftbefeuchters vorgesehen, die verhindern, dass Reinigungsmittel in direkten Kontakt mit dem aktiven Element (z.B. Zerstäuber, Verdampfer) des Luftbefeuchters gelangt.

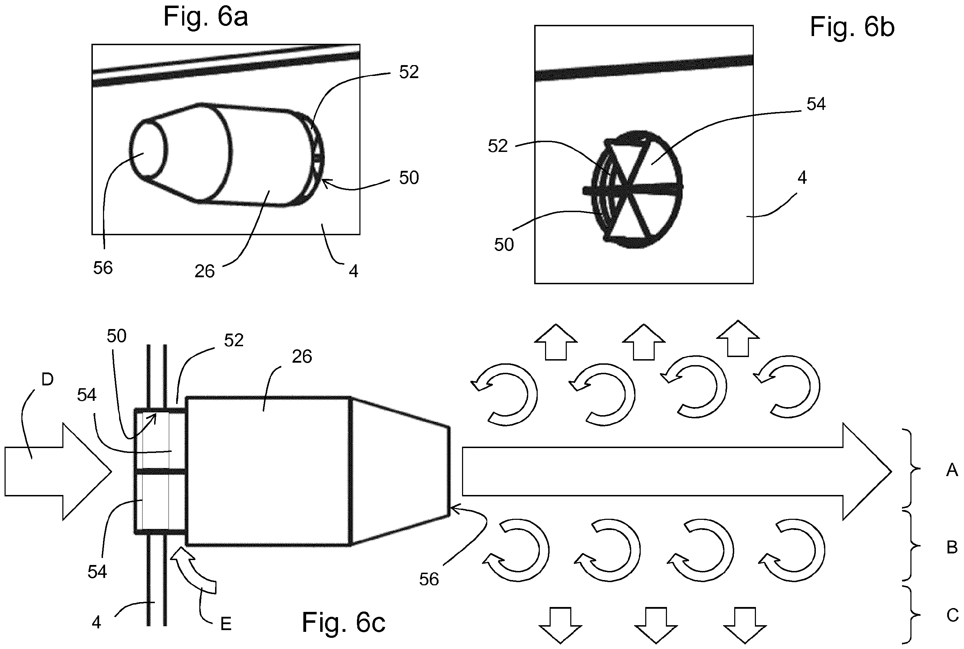

Fig. 1 zeigt weiter an der Außenwand der Auslass- bzw. Druckkammer 8 angeordnete Induktionsdüsen 26. Aufgrund des durch den Lüfter 10 erzeugten Überdrucks in der Auslasskammer 8 und der hinter bzw. an den Induktionsdüsen 26 vorgesehenen Öffnungen 50 an der Kammerwand, strömt Luft als Jetströmung A aus der Kammer 8 durch die Düsen 26 und aus dem Düsenauslass 56 aus. Details zum Düsenaufbau und zur Jetströmung A sind in Fig. 6c dargestellt. Die Anzahl der pro Seite (vorne / hinten / links / rechts) des Klimageräts angeordneten Induktionsdüsen hängt von der Position des Klimagerätes im Raum, von der Strecke zwischen der jeweiligen Seite, dem Düsenquerschnitt und der Förderleistung des Lüfters 10 ab. In Ausgestaltung können verschiedene Anzahl von Düsen (beispielsweise von 0 (Geräteseite, die an Raumwand angrenzt) bis 5 Düsen oder bis zu 20 Düsen oder mehr Düsen) je Seite vorgesehen sein und/oder die Düsenformen und -querschnitte sich unterscheiden und/oder einzelne oder alle Düsen schwenkbar sein. Vorzugsweise sind bei der Anordnung von mehreren Düsen pro Geräteseite die Düse(n) auf einer Seite relativ zur Wandfläche des Klimagerätes schwenkbar (so dass die Auslassrichtung einstellbar ist) und/oder die Düsen weisen in verschiedene Richtungen, so dass der Deckenbereich des Raums gleichmäßig mit der Jetströmung beaufschlagt und durchströmt werden kann.

Fig. 2 zeigt eine Schnittansicht einer weiteren Ausführung eines Klimageräts 2a. Gleiche oder gleichwirkende Elemente sind mit dem gleichen Bezugszeichen versehen, oder mit der Bezugszeichenergänzung 'a' versehen, wenn eine abweichende Anordnung vorgesehen ist. Bezüglich der detaillierten Beschreibung und Funktion wird auf die obige Beschreibung vollumfänglich Bezug genommen, so dass - soweit nichts anderes beschrieben - das Gleiche für die in Fig. 1, 2 und 7 gezeigten Ausführungsbeispiele zutrifft.

Fig. 2 zeigt eine beispielhafte Anordnung des Klimageräts 2a, die auch für das Klimagerät 2 vorgesehen sein kann. Dabei ist das Klimagerät 2a dicht oder direkt unterhalb der Decke 72 des zu klimatisierenden Raums 74 angeordnet. Die Rückseite des Klimageräts ist hier beispielhaft einige zig Zentimeter von einer Raumwand 70 beabstandet. Beispielhaft ist eine Induktionsdüse 26 an der Rückseite des Klimageräts 2a vorgesehen, die in Richtung der gegenüberliegenden Raumwand 70 ausbläst. Dadurch wird auch der Raumbereich zwischen Gerät 2a und Raumwand 70 von einer Jetströmung A erfasst. In Ausgestaltung kann vorgesehen sein, dass bei einem geringen Abstand zwischen Raumwand 70 und Klimagerät 2a keine Düse 26 vorgesehen ist, die in diese Richtung ausbläst.

Anders als im in Fig. 1 dargestellten Klimagerät 2 ist beim Klimagerät 2a der Antrieb bzw. Motor 14a des Lüfters 10a außerhalb des Gehäuses 4 des Klimagerätes angeordnet. Vorzugsweise ist der Motor 14a auch außerhalb des zu klimatisierenden Raums 74 angeordnet, so dass die Abwärme des Motors 14a weder im Klimagerät noch im Raum 74 abgegeben werden. Der Motor 14a ist dabei über eine Welle 15 mit dem in der Auslasskammer angeordneten Flügelrad 12 verbunden. In weiterer Ausgestaltung der Klimageräte 2 oder 2a kann das Flügelrad 12 in der Ansaugkammer z.B. an der Unterseite der Trennwand 42 angeordnet sein oder teilweise im Durchgang der Ansaugöffnung 44 in der Trennwand 42 (vgl. Fig. 3). Bei den dargestellten Beispielen ist das Flügelrad 12 wie bei einem Radialluftgebläse ausgebildet. Bei der ersten Alternative (Flügelrad unter Trennwand) kann das Flügelrad ein in umgekehrte Richtung wirkendes Radialsauggebläse oder ein Axialgebläse sein und bei der zweiten Alternative (Flügelrad teilweise in Ansaugöffnung 44) kann das Flügelrad oben als radial blasendes und unten als radial saugendes Flügelrad oder vorteilhaft als Axialgebläse ausgebildet sein.

Bei der Anordnung von Fig. 2 ist der Luftbefeuchter 28 außerhalb des zu klimatisierenden Raums 74 angeordnet, vorzugsweise wie dargestellt ist der Luftbefeuchter 28 außerhalb der Raumseitenwand 70 oder oberhalb der Raumdecke 72 angeordnet. Der Fluidkanal 32 ist durch die Wand 70 geführt. Während beim Klimagerät 2 die Zuluftleitung 38 vom Gehäuse 31 des Luftbefeuchters 28 nach unten weggeführt ist, ist die Zuluftleitung 38 des Geräts 2a vom Gehäuse 31 des Luftbefeuchters nach oben weggeführt (und weiterhin durch die Decke des angrenzenden Raums in dem der Luftbefeuchter angeordnet ist). In alternativer Ausgestaltung ist die Zuluftleitung seitlich zum Gehäuse 31 des Luftbefeuchters 28 geführt. Durch die Anordnung des Luftbefeuchters 28 außerhalb des zu klimatisierenden Raums 74 können Wartungsarbeiten am Luftbefeuchter ausgeführt werden, ohne die Klimabedingungen im zu klimatisierenden Raum zu beeinflussen. Durch die Pfeile sind die Strömung von Außenluft G in Richtung Luftbefeuchter 28 bzw. Zerstäuber 30 und die Strömung der befeuchteten Luft H vom Luftbefeuchter in die Ansaugkammer 6 dargestellt. In der Querschnittansicht sind bei der rechts dargestellten Induktionsdüse 26 ein Ansaugspalt 52 zwischen der Außenwand der Auslasskammer 8 und der Rückseite der Düse 26 erkennbar. Die Luft aus der Auslasskammer 8 tritt durch eine Kammeröffnung so aus und strömt von dort durch die Düse 26 (vgl. weitere Beschreibung zu Fig. 6c). Schematisch sind in Fig. 2 die Medienleitungen 17 eingezeichnet. In Abhängigkeit davon, ob der Wärmetauscher 16 eine Kühlung 18 und/oder eine Heizung 22 aufweist sind mehrere Leitungen vorgesehen, beispielsweise Kühlmittelleitungen bei Einsatz eines Verdampfers und/oder Kondensators eines Wärmepumpensystems oder elektrische Leitungen im Falle einer elektrischen Heizung.

Fig. 3 zeigt das Klimagerät 2a von Fig. 2 in perspektivischer Darstellung. Zur Illustration ist eine Seitenwand des Gehäuses 4 entfernt, so dass der Blick ins Innere des Geräts 2a freigegeben ist (entsprechend Gerät 2). Die Seitenwand kann als einstückiges bzw. einteiliges Teil und als abnehmbare Seitenwand ausgebildet sein oder als zwei getrennt abnehmbare Teile, wobei eines die Seite der Ansaugkammer 6 abdeckt und das andere Teil die Seite der Auslasskammer 8 abdeckt. Alternativ kann die Seitenwand als einteilige Abdeckung oder Tür vorgesehen sein, die schwenkbar ist und beide Kammern 6, 8 abdeckt, oder als zweiflüglige Tür, wobei eine Tür bzw. schwenkbare Abdeckung die Ansaugkammer 6 abdeckt und die andere Tür bzw. schwenkbare Abdeckung die Auslasskammer 8 abdeckt. Das seitliche Öffnen des Gehäuses 4 ist wünschenswert, um eine Reinigung oder Wartung im Inneren des Klimageräts 2, 2a durchzuführen.

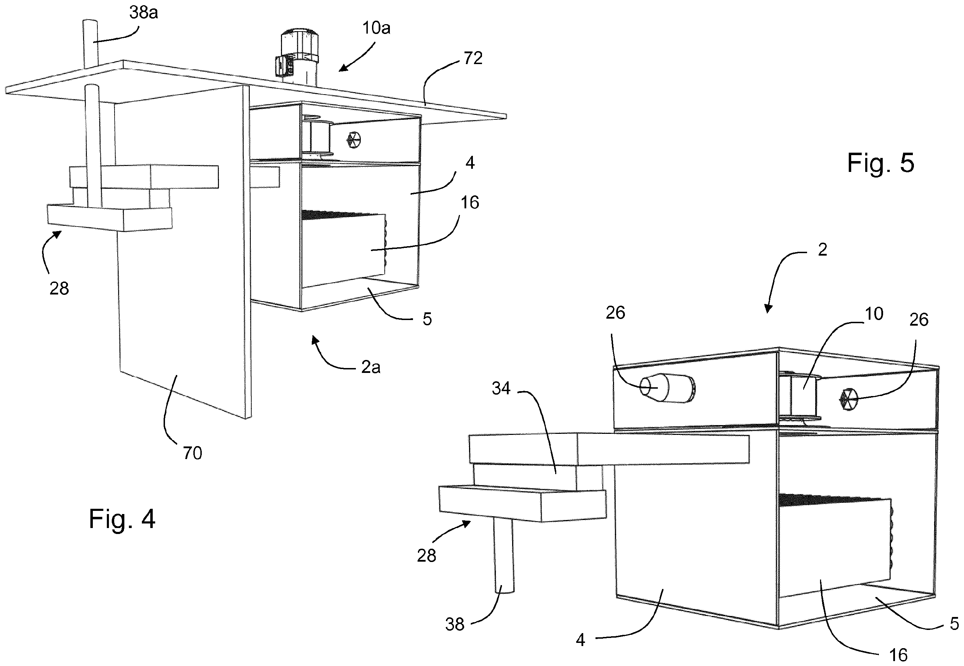

Eine weitere perspektivische Ansicht des Klimageräts 2a von Fig. 2 ist in Fig. 4 dargestellt und eine perspektivische Ansicht des geöffneten Klimageräts 2 von Fig. 1 ist in Fig. 5 dargestellt.

Fig. 6a zeigt eine perspektivische Vorderansicht einer an der Gehäusewand 4 des Klimageräts 2 oder 2a installierten Induktionsdüse 26. Wie oben bereits teilweise beschrieben, hat die Düse 26 auslassseitig einen Düsenauslass 56. Im Düseninneren ist ein Abscheider 54 angeordnet (vgl. Fig. 3 und 6b). Der Abscheider ist aus einem oder vorzugsweise aus mehreren Blechen ausgebildet, die als Prallflächen für aus der Auslasskammer 8 in Richtung Lagerraum 74 austretende Tröpfchen wirken. An den Flächen des Abscheiders 54 werden Tropfen aus der Strömung aufgefangen, die dann entlang der Flächen in die Kammer 8 zurückfließen oder durch den Spalt 52 abtropfen und vorzugsweise von der Auffangwanne 60 (vgl. Fig. 7) aufgefangen werden. Die Abscheidung von Tropfen an den Abscheidern 54 (vorzugsweise je ein Abscheider je Induktionsdüse) erfolgt nicht nur während des Klimabetriebs sondern auch während der Reinigung der Innenflächen in der Auslasskammer 8.

Vorteilhaft und wie in den Figuren dargestellt, ist der im Inneren der Düsen 26 angeordnete Abscheider 54 nach hinten über die hintere Kante der Düse 26 herausgeführt. Die Düse ist am Abscheider 54 befestigt bzw. umgekehrt und der Abscheider 54 ist an seinem hinteren Ende an der Seitenwand der Auslasskammer 8 befestigt. Die Befestigung kann beispielsweise am Randbereich der Kammeröffnung 50 erfolgen. Der Abscheider 54 wirkt somit auch als Träger für die Befestigung der Düse 26 an der Wand der Kammer 8. Besonders vorzugsweise ist die aus dem hinteren Teil der Düse ragenden Länge des Abscheiders 54 und die Befestigungsstellen des Abscheiders an der Kammeröffnung 50 derart, dass die hintere Kante der Düse 26 einige Millimeter oder Zentimeter (z.B. 2 bis 15 mm oder 1,5 bis 5 cm) von der Außenseite der Kammerwand bzw. von der Öffnung 50 entfernt ist und sich ein Ansaugspalt 52 ergibt. Alternativ oder zusätzlich ist die Länge der Abscheider 54 (die auch allgemein als Lamellen bezeichnet werden können) so ausgebildet, dass die Abscheider einige Millimeter oder Zentimeter (z.B. 2 bis 15 mm oder 1,5 bis 5 cm) von der Innenseite der Kammerwand durch die Öffnung 50 in den Innenraum der Kammer 8 ragen. Dieser innenseitige Überstand der Abscheider 54 verbessert weiter das Abtropfen von an den Abscheiderflächen niedergeschlagener Feuchtigkeit bzw. Wasser in das Innere der Kammer 8, wodurch ein außenseitiges Ablaufen und Abtropfen von Feuchtigkeit weiter verhindert wird.

In Fig. 6a ist die Düse 26 von der Außenseite der Auslasskammer zu sehen, so dass der Ansaugspalt 52 zu erkennen ist, während Fig. 6b eine perspektivische Rückansicht der Induktionsdüse 26 zeigt, so dass die Anordnung und Befestigung des Abscheiders 54 an der Kammeröffnung 50 zu erkennen ist. Fig. 6c zeigt die Anordnung von Fig. 6a und 6b in Schnittansicht. Durch die Pfeile ist dargestellt, wie die Luft aus der Auslasskammer 8 als Primärluftströmung D durch die Öffnung 50 aus und in die Düse 26 einströmt. Die Primärluftströmung D induziert beim Vorbeiströmen am Ansaugspalt 52 einen Ansaug- bzw. Venturi-Effekt, wodurch durch den Spalt 52 eine Sekundärluftströmung E entsteht, die die Primärluftströmung D in der Düse 26 verstärkt. Aus der Düsenöffnung 56 tritt dann die Jetströmung A als Addition der Primär- und Sekundärluftströmung D, E aus.

Durch die hohe Geschwindigkeit der Jetströmung A wird diese nur wenig durch die Raumluft F in dem zu klimatisierenden Raum 74 abgebremst und die Jetströmung A hat eine hohe Reichweite innerhalb des Raums 74. Dadurch kann einerseits die Größe des Klimageräts 2, 2a klein gehalten werden und es sind andererseits keine Luftkanäle oder Luftsäcke erforderlich, um die gleichmäßige Verteilung der temperierten und befeuchteten Luft aus dem Klimagerät innerhalb des Raums 74 zu verteilen. Die Abgabe bzw. Durchmischung der Luft aus der Jetströmung A mit der Raumluft F ist in Fig. 6c angedeutet. Unmittelbar um die Jetströmung A bilden sich an dessen Randbereich (Induktionszone) kleine Durchmischungswirbel, die so eine um die Jetströmung A begrenzte Durchmischungszone B ausbilden. In den angrenzenden Bereich um die Durchmischungszone B gibt die Durchmischungszone einen Teil der klimatisierten und befeuchteten Luft ab, so dass sich anschließend an die Durchmischungszone eine Volumenströmung C ergibt, die dann als laminare Strömung den zu klimatisierenden Raum gleichmäßig durchströmt, bis diese von dort als Raumluft F wieder vom Klimagerät 2, 2a angesaugt wird. Durch diese 'Induktion' ausgehend von der Jetströmung A (mit hoher Reichweite) ergibt sich eine gleichmäßige Klimatisierung des Raums 74 trotz geringer Bauabmessungen des Klimageräts und ohne Verwendung weiterer Luftverteilungseinrichtungen. Letztere müssten z.B. bei einem Chargenwechsel von gelagerten Lebensmitteln ebenfalls gereinigt werden.

Fig. 7 zeigt eine weitere Ausführung eines Klimageräts (z.B. als Ergänzung zum Gerät 2 oder 2a) in Schnittansicht mit im Gehäuse 4 installierten Reinigungsdüsen bzw. Sprühdüsen 62. Die Sprühdüsen 62 können feststehende Düsen (z.B. in Form von Brauseköpfen) sein, können Rotationsdüsen (z.B. drehbar gelagerte Köpfe mit gerichtetem aber rotierendem Strahl) sein, können Sprüharme (z.B. wie bei einer Spülmaschine) sein oder können eine Kombination der vorgenannten Düsen sein. Zur Reinigung und zum anschließenden Klarspülen des Innenraums des Klimageräts 2, 2a wird den Sprühdüsen Spülflüssigkeit und/oder eine Klarspülflüssigkeit durch eine Spülmittelleitung 64 zugeführt. Die Spülmittelleitung 64 ist mit einem oder mehreren Ventilen 65 verbunden. Vorzugsweise werden die Spülflüssigkeit und/oder die Klarspülflüssigkeit mit hohem Druck zu den Düsen 64 geleitet, so dass die Flüssigkeit hohe Reinigungswirkung entfaltet und ggf. die Düsen bzw. Sprüharme in Rotation versetzt werden. Anhand der Sprühstrahlen 65 ist in Fig. 6 die Verteilung der Flüssigkeiten veranschaulicht. Auf diese Weise kann eine CIP-Reinigung (CIP = Cleaning In Place) durchgeführt werden, ohne dass es idealerweise eines manuellen Eingriffs in das Klimagerät bedarf. Beispielsweise ist es bei einer automatischen CIP-Reinigung nicht notwendig, das Klimagerät zu öffnen (z.B. durch das Öffnen oder Entfernen der Seitenwand wie oben beschrieben).

Die versprühte Flüssigkeit tritt bodenseitig durch die Bodenöffnung 5 im Gehäuse 4 des Klimageräts 2, 2a und wird durch eine unterhalb der Öffnung 5 angeordnete Auffangwanne 5 aufgefangen. Wie oben bereits beschrieben, wird im Bereich oder in der Fluidverbindung zum Luftbefeuchter 28 während der Reinigung Flüssigkeit oder Schaum durch die Abschirmung 36 und/oder die Tropfenfalle 34 abgefangen. Im Bereich der Induktionsdüsen 26 wird während der Reinigung Flüssigkeit oder Schaum durch den Abscheider 54 aufgefangen, so dass keine Reinigungsflüssigkeit aus der Auslasskammer 8 in den Raum 74 (z.B. dessen Boden) gelangen kann.

Fig. 8 zeigt in schematischer Blockdarstellung eine Steuerung und Komponenten des Klimageräts. Das Klimagerät 2, 2a wird von einer Steuereinheit 100 gesteuert und geregelt bezüglich der Sollwertvorgaben für Luftfeuchtigkeit, Lufttemperatur und optional der Strömungsgeschwindigkeit der Luftströmung innerhalb des Lagerraums 74. Optional können die Temperatur, Luftfeuchtigkeit und/oder Strömungsgeschwindigkeit mittels eines programmierbaren bzw. programmierten Zeitverlauf-Profils angesteuert werden. Beispielsweise wird die Raumtemperatur während einer anfänglichen Initialisierungsphase höher eingestellt und dann während einer Reifungsphase des gelagerten Lebensmittels (z.B. Käse oder Backwaren) verringert.

Eingaben für die Steuereinheit 100 werden über eine Ein-/Ausgabeeinheit 102 eingegeben, die auch Statusdaten des Betriebs anzeigt oder ausgibt. Die Steuereinheit 100 steuert
- den Lüfterantrieb 104 des Lüfters 10, 10a, wobei vorteilhaft die Förderleistung des Lüfters über Änderung der Antriebsleistung veränderbar bzw. einstellbar ist, und/oder
- die Luftbefeuchtereinheit 106 (mit dem Luftbefeuchter 28), wobei die Wasserabgabe intervallweise ein- und ausgeschaltet wird oder vorzugsweise die Rate der Wassererzeugung gesteuert variiert wird (siehe oben), wobei die Luftbefeuchtereinheit 106 optional die Zufuhr des abzugebenden Wassers über die optionale Wasserdosiereinheit 108 (vgl. Dosierer 41) steuert, und/oder
- die Wärmepumpensteuerung 110, die wiederum die Kühlung 18 (z.B. mittels eines Kühlungsventils 112) und/oder die Heizung 22 (z.B. mittels eines Heizungsventils 114) steuert, und/oder
- die Reinigungseinheit 126, mittels der der Innenraum bzw. die Innenflächen des Klimageräts beispielsweise unter Einsatz der Sprühdüsen 62 gereinigt werden.

Der Steuereinrichtung werden die Messwerte zugeführt von
- einer Temperatursensoreinheit 120, die die Temperatur im Lagerraum 74 misst,
- einer Luftfeuchtesensoreinheit, die die Luftfeuchtigkeit im Lagerraum 74 misst, und
- optional einer Luftströmungsmesseinheit 124, die die Strömungsgeschwindigkeit der Luft im Lagerraum 74 misst.

**Bezugszeichenliste:**

| | | | |
|---|---|---|---|
| 2, 2a | Klimagerät | 54 | Abscheider / Träger |
| 4 | Gehäuse | 56 | Düsenauslass |
| 5 | Bodenöffnung | 60 | Auffangwanne |
| 6 | Ansaug- / Unterdruckkammer | 62 | Sprühdüse |
| 8 | Auslass- / Druckkammer | 64 | Spülmittelleitung |
| 10, 10a | Lüfter | 65 | Ventil |
| 12 | Flügelrad | 66 | Sprühstrahl |
| 14, 14a | Motor | 70 | Raumwand |
| 15 | Welle | 72 | Decke |
| 16 | Wärmetauscher | 74 | Lagerraum |
| 17 | Medienleitungen | 100 | Steuereinheit |
| 18 | Kühlung / Verdampfer (Entfeuchter) | 102 | Ein-/Ausgabeeinheit |
| | | 104 | Lüfterantrieb |
| 20 | Kühlkörper | 106 | Luftbefeuchtereinheit |
| 22 | Heizung / Kondensator | 108 | Wasserdosiereinheit |
| 24 | Heizkörper | 110 | Wärmepumpensteuerung |
| 26 | Induktionsdüse | 112 | Ventil zur Kühlung |
| 28 | Luftbefeuchter | 114 | Ventil zur Heizung |
| 30 | Zerstäuber | 120 | Temperatursensoreinheit |
| 31 | Befeuchtergehäuse | 122 | Luftfeuchtesensoreinheit |
| 32 | Fluidkanal | 124 | Strömungsmesseinheit |
| 34 | Tropfenfalle | 126 | Reinigungseinheit |
| 36 | Abschirmung | A | Jetströmung |
| 38, 38a | Zuluftleitung | B | Durchmischungszone |
| 40 | Wasserzuleitung | C | Volumenströmung |
| 41 | Dosierer | D | Primärluftströmung |
| 42 | Trennwand | E | Sekundärluftströmung |
| 44 | Ansaugöffnung | F | Raumluft |
| 50 | Kammeröffnung | G | Außenluft |
| 52 | Ansaugspalt / Ansaugöffnung | H | Wassernebel/-dampf |

## Patentansprüche

1. Klimatisierungsvorrichtung (2, 2a) für die Inneninstallation in einem Lager-, Reife-oder Aufzuchtraum (74), wobei die Vorrichtung aufweist:
ein Gehäuse (4) mit einer Ansaugkammer (6) und einer Auslasskammer (8),
eine im Gehäuse (4) angeordnete Luftfördereinrichtung (10, 10a), wobei die Luftfördereinrichtung dazu ausgelegt ist, Luft von der Ansaugkammer (6) zur Auslasskammer (8) zu fördern,
eine im Gehäuse (4) oder unterhalb der Ansaugkammer angeordnete Wärmetauschereinrichtung (16),
zumindest eine an der Auslasskammer (8) angeordnete Luftaustrittsöffnung (26, 50), und
wobei die zumindest eine Luftaustrittsöffnung (26, 50) eine Luftdüse (26) aufweist, insbesondere zumindest eine schwenkbar gelagerte Luftdüse,
**dadurch gekennzeichnet, dass**
zwischen der zumindest einen Luftdüse (26) und der zugeordneten Öffnung (50) in der Wand des Gehäuses (4) eine Ansaugöffnung (52) vorgesehen ist, vorzugsweise ein Ansaugspalt vorgesehen ist, und/oder
an der Luftdüse (26) eine oder mehrere seitliche Eintrittsöffnungen oder Eintrittsspalte vorgesehen sind, durch den bzw. die Luft (E) von außerhalb der Luftdüse (26) und von außerhalb des Gehäuses (4) in die Luftdüse einströmt.

2. Klimatisierungsvorrichtung nach Anspruch 1, wobei zwei, drei, vier oder mehr räumlich voneinander beabstandete Luftaustrittsöffnungen mit jeweils einer Luftdüse vorgesehen sind.

3. Klimatisierungsvorrichtung nach Anspruch 1 oder 2, wobei beim Betrieb der Luftfördereinrichtung (10, 10a) die Vorrichtung (2, 2a) dazu ausgelegt ist, die Luft mit einer solchen Durchflussrate durch die oder jede der Luftdüsen (26) zu fördern, dass sich auf der Ausströmungsseite der Luftdüse(n) durch den hohen Luftstrom in den zu klimatisierenden Raum ein Induktionsluftstrom ausbildet.

4. Klimatisierungsvorrichtung nach einem der vorhergehenden Ansprüche, wobei der zumindest einen Luftaustrittsöffnung (26, 50) eine Tropfenabscheideeinrichtung (54) zugeordnet ist, die den Austritt von Flüssigkeitstropfen aus der Auslasskammer (8) zur Außenseite der Auslasskammer verhindert oder reduziert, wobei insbesondere die Tropfenabscheideeinrichtung (54) zumindest teilweise in der zumindest einen oder in einer zumindest einer Luftaustrittsöffnung zugeordneten Luftdüse (26) angeordnet ist.

5. Klimatisierungsvorrichtung nach Anspruch 4, wobei die Tropfenabscheideeinrichtung (54) als Träger- und/oder Verbindungselement ausgebildet ist, das die Luftdüse (26) mit dem Gehäuse (6) der Klimatisierungsvorrichtung (2, 2a) verbindet.

6. Klimatisierungsvorrichtung nach einem der vorhergehenden Ansprüche, wobei die Vorrichtung aufweist:
eine Luftbefeuchtungseinrichtung (28).

7. Klimatisierungsvorrichtung nach Anspruch 6,
wobei die Luftbefeuchtungseinrichtung (28) außerhalb des Gehäuses (4) der Klimatisierungsvorrichtung (2, 2a) angeordnet ist und mit dem Innenraum (6, 8) des Gehäuses (4) über einen Zuleitungskanal (32, 34) oder eine Fluidverbindung verbunden ist, und/oder
wobei die Luftbefeuchtungseinrichtung (28) innerhalb eines Befeuchtergehäuses (31) angeordnet ist und der Innenraum des Befeuchtergehäuses (31) mit dem Innenraum (6, 8) des Gehäuses (4) der Klimatisierungsvorrichtung (2, 2a) über eine Fluidverbindung verbunden ist.

8. Klimatisierungsvorrichtung nach Anspruch 7, wobei an oder in der Fluidverbindung und/oder an oder in dem Zuleitungskanal (32, 34) eine Flüssigkeitsseparations- oder Sperreinrichtung (34, 36) angeordnet ist, die dazu eingerichtet ist, das Eindringen von Flüssigkeit aus dem Innenraum (6, 8) des Gehäuses (4) der Klimatisierungsvorrichtung (2, 2a) und/oder in den Innenraum des Befeuchtergehäuses (31) zu blockieren.

9. Klimatisierungsvorrichtung nach Anspruch 7 oder 8,
wobei das Befeuchtergehäuse (31) eine Zuluftleitung oder -öffnung (38, 38a) aufweist, deren Eintrittsseite nicht mit dem Innenraum (6, 8) des Gehäuses (4) der Klimatisierungsvorrichtung (2, 2a) verbunden ist, und/oder
wobei die Befeuchtungseinrichtung (28) eine Wasserzufuhrleitung (40) zum Zuführen von Wasser aufweist, wobei vorteilhaft die Wasserzufuhrleitung nach außerhalb des zu klimatisierenden Raums (74) geführt ist.

10. Klimatisierungsvorrichtung nach einem der vorhergehenden Ansprüche, wobei die Wärmetauschereinrichtung (16) eine Heizeinrichtung (22) und/oder eine Kühleinrichtung (18) aufweist.

11. Klimatisierungsvorrichtung nach einem der vorhergehenden Ansprüche, wobei an oder innerhalb der Ansaugkammer (6) und/oder der Auslasskammer (8) zumindest eine Verteilungseinrichtung (62) zum Verteilen eines Reinigungsmediums (66) innerhalb der Ansaugkammer (6) und/oder der Auslasskammer (8) angeordnet ist, wobei insbesondere die Verteilungseinrichtung (62) eine Sprühdüse aufweist.

12. Anordnung mit einem zu klimatisierenden Lager-, Reife- und/oder Aufzuchtraums (74) und einer Klimatisierungsvorrichtung (2, 2a) nach einem der vorhergehenden Ansprüche,
wobei das Gehäuse (4) der Klimatisierungsvorrichtung (2, 2a) mit der Ansaugkammer (6) und der Auslasskammer (8) innerhalb des zu klimatisierenden Raums (74) angeordnet ist, und
wobei die Luftbefeuchtungseinrichtung (28) nach einem der Ansprüche 6 bis 9 und/oder ein Antrieb (14a) der Luftfördereinrichtung (10a) außerhalb des Raums (74) angeordnet ist.

13. Verwendung der Klimatisierungsvorrichtung nach einem der Ansprüche 1 bis 11 oder der Anordnung nach Anspruch 12 zur Klimatisierung und Befeuchtung eines Lager-, Reife- und/oder Aufzuchtraums, wobei der Lager- oder Reiferaum zur Lagerung, Reifung oder Aufzucht von Lebensmitteln eingerichtet ist, insbesondere zur Lagerung, Reifung oder Aufzucht von Käse, Backwaren, Teig, Gemüse, Obst, Pilzkulturen oder Gewebekulturen.

## Claims

1. Air conditioning device (2, 2a) for the indoor installation in a storage, ripening or growing room (74), wherein the device comprises:
a housing (4) having a suction chamber (6) and an outlet chamber (8),
an air conveyer (10, 10a) arranged in the housing (4), wherein the air conveyor is adapted to convey air from the suction chamber (6) to the outlet chamber (8),
a heat exchanger system (16) arranged in the housing (4) or below the suction chamber,
at least one air outlet opening (26, 50) arranged at the outlet chamber (8), and
wherein the at least one air outlet opening (26, 50) comprises an air nozzle (26), in particular at least one pivotably mounted air nozzle,
**characterized in that**
a suction opening (25) is provided between the at least one air nozzle (26) and the associated opening (50) in the wall of the housing (4), preferably a suction gap, and/or
one or more lateral inlet openings or inlet gaps are provided at the air nozzle (26), through which the air (E) flows from outside the air nozzle (26) and from outside the housing (4) into the air nozzle.

2. Air conditioning device of claim 1, wherein two, three, four or more spatially spaced air outlet openings each having an air nozzle are provided.

3. Air conditioning device of claim 1 or 2, wherein in operation of the air conveyor (10, 10a), the device (2, 2a) is adapted to convey the air through the or each of the air nozzles (26) at such a flow rate that an induction air flow is formed on the discharge side of the air nozzle(s) by the high air flow into the room to be air-conditioned.

4. Air conditioning device of any of the preceding claims, wherein the at least one air outlet opening (26, 50) is associated with a droplet separation system (54) which prevents or reduces the outlet of liquid droplets from the outlet chamber (8) to the outside of the outlet chamber, wherein in particular the droplet separation system (54) is at least partially arranged in the at least one or in an air nozzle (26) associated with at least one air outlet opening.

5. Air conditioning device of claim 4, wherein the droplet separation system (54) is formed as carrier and/or connecting element connecting the air nozzle (26) to the housing (6) of the air conditioning device (2, 2a).

6. Air conditioning device of any of the preceding claims, wherein the device comprises:
an air humidifying apparatus (28).

7. Air conditioning device of claim 6,
wherein the air humidifying apparatus (28) is arranged outside the housing (4) of the air-conditioning device (2, 2a) and is connected to the interior (6, 8) of the housing (4) via a supply channel (32, 34) or a fluid connection, and/or
wherein the air humidifying apparatus (28) is arranged inside a humidifier housing (31) and the interior of the humidifier housing (31) is connected to the interior (6, 8) of the housing (4) of the air-conditioning device (2, 2a) via a fluid connection.

8. Air conditioning device of claim 7, wherein at or in the fluid connection and/or at or in the supply channel (32, 34) a liquid separation or blocking appliance (34, 36) is arranged which is set up to prevent liquid from penetrating from the interior (6, 8) of the housing (4) of the air-conditioning device (2, 2a) and/or into the interior of the humidifier housing (31).

9. Air conditioning device of claim 7 or 8,
wherein the humidifier housing (31) comprises an air supply channel or opening, (38, 38a) the inlet side of which is not connected to the interior (6, 8) of the housing (4) of the air conditioning device (2, 2a), and/or
wherein the humidifying apparatus (28) comprises a water supply pipe (40) for supplying water, wherein advantageously the water supply pipe is connected to the outside of the room to be air-conditioned.

10. Air conditioning device of any of the preceding claims, wherein the heat exchanger system (16) comprises a heating apparatus (22) and/or a cooling apparatus (18).

11. Air conditioning device of any of the preceding claims, wherein at or inside the suction chamber (6) and/or the outlet chamber (8) at least one distribution device (62) is arranged for distributing a cleaning medium (66) inside the suction chamber (6) and/or the outlet chamber (8), wherein in particular the distribution device (62) comprises a spray nozzle.

12. Arrangement with a storage, ripening and/or growing room (74) to be air-conditioned and an air conditioning device (2, 2a) of one of the preceding claims,
wherein the housing (4) of the air conditioning device (2, 2a) is arranged with the suction chamber (6) and the outlet chamber (8) inside the room to be air-conditioned, and
wherein the air humidifying apparatus (28) of one the claims 6 to 9 and/or a drive (14a) of the air conveyor (10a) is arranged outside the room (74).

13. Use of the air conditioning device of any of claims 1 to 11 or the arrangement of claim 12 for air conditioning and humidification of a storage, ripening and/or growing room, wherein the storage or ripening room is set up for storage, ripening or growing of food, in particular for storage, ripening or growing of cheese, bakery products, dough, vegetables, fruit, mushroom cultures or tissue cultures.

## Revendications

1. Dispositif de conditionnement d'air (2, 2a) pour une installation en intérieur dans une salle de stockage, d'affinage ou d'élevage (74), le dispositif comportant :
un boîtier (4) ayant une chambre d'aspiration (6) et une chambre de sortie (8),
un dispositif de transport d'air (10, 10a) disposé dans le boîtier (4), le dispositif de transport d'air étant conçu pour transporter l'air de la chambre d'aspiration (6) vers la chambre de sortie (8),
un dispositif d'échangeur de chaleur (16) disposé dans le boîtier (4) ou sous la chambre d'aspiration,
au moins une ouverture de sortie d'air (26, 50) disposée sur la chambre de sortie (8), et
l'au moins une ouverture de sortie d'air (26, 50) comportant une buse d'air (26), en particulier au moins une buse d'air montée de manière pivotante,
**caractérisé en ce que**
une ouverture d'aspiration (52) est prévue entre l'au moins une buse d'air (26) et l'ouverture associée (50) dans la paroi du boîtier (4), de préférence un espace d'aspiration est prévu, et/ou
une ou plusieurs ouvertures d'entrée ou fentes d'entrée latérales sont prévues sur la buse d'air (26) à travers lesquelles l'air (E) s'écoule dans la buse d'air depuis l'extérieur de la buse d'air (26) et depuis l'extérieur du boîtier (4).

2. Dispositif de conditionnement d'air selon la revendication 1, dans lequel deux, trois, quatre ouvertures de sortie d'air ou plus espacées les unes des autres dans l'espace sont prévues avec chacune une buse d'air.

3. Dispositif de conditionnement d'air selon la revendication 1 ou 2, dans lequel pendant le fonctionnement du dispositif de transport d'air (10, 10a), le dispositif (2, 2a) est conçu pour déplacer l'air à travers la buse d'air ou chacune des buses d'air (26) avec un débit tel qu'un flux d'air d'induction se forme du côté de la sortie de la ou des buses d'air du fait du débit d'air élevé dans la salle à climatiser.

4. Dispositif de conditionnement d'air selon l'une des revendications précédentes, dans lequel l'au moins une ouverture de sortie d'air (26, 50) est associée à un séparateur de gouttelettes (54) qui empêche ou réduit l'échappement de gouttelettes de liquide de la chambre de sortie (8) vers le côté extérieur de la chambre de sortie, en particulier le séparateur de gouttelettes (54) étant disposé au moins partiellement dans l'au moins une buse d'air ou dans une buse d'air (26) associée à au moins une ouverture de sortie d'air.

5. Dispositif de conditionnement d'air selon la revendication 4, dans lequel le séparateur de gouttelettes (54) est conçu comme un élément de support et/ou de liaison qui relie la buse d'air (26) au boîtier (6) du dispositif de conditionnement d'air (2, 2a).

6. Dispositif de conditionnement d'air selon l'une des revendications précédentes, dans lequel le dispositif comporte :
un humidificateur d'air (28).

7. Dispositif de conditionnement d'air selon la revendication 6,
dans lequel l'humidificateur d'air (28) est disposé à l'extérieur du boîtier (4) du dispositif de conditionnement d'air (2, 2a) et est relié à l'intérieur (6, 8) du boîtier (4) par un conduit d'alimentation (32, 34) ou une connexion fluidique, et/ou
dans lequel l'humidificateur d'air (28) est disposé à l'intérieur d'un boîtier d'humidificateur (31) et l'intérieur du boîtier d'humidificateur (31) est relié à l'intérieur (6, 8) du boîtier (4) du dispositif de conditionnement d'air (2, 2a) par une connexion fluidique.

8. Dispositif de conditionnement d'air selon la revendication 7, dans lequel un dispositif de séparation ou de blocage de liquide (34, 36) est disposé sur ou dans la connexion fluidique et/ou sur ou dans le conduit d'alimentation (32, 34), lequel dispositif est configuré pour empêcher la pénétration de liquide depuis l'intérieur (6, 8) du boîtier (4) du dispositif de conditionnement d'air (2, 2a) et/ou à l'intérieur du boîtier d'humidificateur (31).

9. Dispositif de conditionnement d'air selon la revendication 7 ou 8,
dans lequel le boîtier d'humidificateur (31) comporte une conduite ou ouverture d'alimentation en air (38, 38a), dont le côté d'entrée n'est pas relié avec l'intérieur (6, 8) du boîtier (4) du dispositif de conditionnement d'air (2, 2a), et/ou
dans lequel l'humidificateur (28) comporte une conduite d'alimentation en eau (40) destinée à fournir de l'eau, la conduite d'alimentation en eau menant avantageusement à l'extérieur de la salle à climatiser (74).

10. Dispositif de conditionnement d'air selon l'une des revendications précédentes, dans lequel le dispositif d'échangeur de chaleur (16) comporte un dispositif de chauffage (22) et/ou un dispositif de refroidissement (18).

11. Dispositif de conditionnement d'air selon l'une des revendications précédentes, dans lequel au moins un dispositif de distribution (62) destiné à distribuer un agent de nettoyage (66) à l'intérieur de la chambre d'aspiration (6) et/ou de la chambre de sortie (8) est disposé sur ou à l'intérieur de la chambre d'aspiration (6) et/ou de la chambre de sortie (8), en particulier le dispositif de distribution (62) comportant une buse de pulvérisation.

12. Agencement comportant une salle de stockage, d'affinage et/ou d'élevage (74) à climatiser et un dispositif de conditionnement d'air (2, 2a) selon l'une des revendications précédentes,
le boîtier (4) du dispositif de conditionnement d'air (2, 2a) comportant la chambre d'aspiration (6) et la chambre de sortie (8) étant disposé à l'intérieur de la salle à climatiser (74), et
l'humidificateur d'air (28) selon l'une des revendications 6 à 9 et/ou un entraînement (14a) du dispositif de transport d'air (10a) étant disposés à l'extérieur de la salle (74).

13. Utilisation du dispositif de conditionnement d'air selon l'une des revendications 1 à 11 ou de l'agencement selon la revendication 12 pour la climatisation et l'humidification d'une salle de stockage, d'affinage et/ou d'élevage, la salle de stockage ou d'affinage étant configurée pour le stockage, l'affinage ou l'élevage d'aliments, en particulier pour le stockage, l'affinage ou l'élevage de fromages, pâtisseries, pâtes, légumes, fruits, cultures de champignons ou cultures de tissus.
